# EUROPÄISCHE PATENTSCHRIFT

(11) **EP 2 496 951 B1**
(45) Veröffentlichungstag und Bekanntmachung des Hinweises auf die Patenterteilung: **17.12.2014**
(21) Anmeldenummer: 10771737.3
(22) Anmeldetag: 28.10.2010
(51) Int. Cl.: G01P 3/00

(54) **VERFAHREN UND VORRICHTUNG ZUR ERMITTLUNG DER GESCHWINDIGKEIT EINES KRAFTFAHRZEUGES**
METHOD AND APPARATUS FOR DETERMINING THE SPEED OF A MOTOR VEHICLE
PROCÉDÉ ET DISPOSITIF DE DÉTERMINATION DE LA VITESSE D'UN VÉHICULE AUTOMOBILE

(30) Priorität: 06.11.2009 DE 102009046448
(43) Veröffentlichungstag der Anmeldung: 12.09.2012
(73) Patentinhaber: Robert Bosch GmbH, 70442 Stuttgart (DE)
(72) Erfinder: SEILER, Rafael, 70806 Kornwestheim (DE); SCHLEMMER, Martin, 74535 Mainhardt (DE)
(86) Internationale Anmeldenummer: PCT/EP2010/066340
(87) Internationale Veröffentlichungsnummer: WO 2011/054724

(56) Entgegenhaltungen:
- DE-A1- 3 534 022
- DE-A1- 4 010 212
- DE-A1- 4 024 815
- US-A1- 2007 061 061

## Beschreibung

### Stand der Technik

Die Erfindung betrifft ein Verfahren zur Ermittlung der Geschwindigkeit eines Kraftfahrzeuges gemäß dem Oberbegriff des Patentanspruches 1, sowie ein Steuergerät gemäß dem Oberbegriff des Patentanspruches 11.

Bei Kraftfahrzeugen wird die tatsächliche Fahrzeuggeschwindigkeit unter anderem aus den einzelnen Radgeschwindigkeiten bzw. den Raddrehzahlen berechnet. Eine genaue Berechnung der Fahrzeuggeschwindigkeit ist aber nur in einem Zustand möglich, im dem zumindest ein Rad im linearen Bereich der Mue-Schlupf Kurve dreht und somit die Radgeschwindigkeit linear in die frei rollende Radgeschwindigkeit übertragen werden kann, welche der Fahrzeuggeschwindigkeit entspricht.

Aus der Druckschrift DE 40 24 815 A1 ist ein Verfahren zur Ermittlung der Geschwindigkeit eines Kraftfahrzeugs bekannt. Dabei wird der Bremsdruck bei Vorliegen von Radschlupf an einem Rad abgesenkt, bis das Rad den linearen Bereich der Mue-Schlupf Kurve erreicht hat. Dann wird die Radgeschwindigkeit gemessen und daraus die Fahrzeuggeschwindigkeit ermittelt.

Bei einem allradgetriebenen Kraftfahrzeug können während eines Beschleunigungsvorgangs alle Räder schlupfbehaftet sein, was die Berechnung der Fahrzeuggeschwindigkeiten erheblich erschwert. Bei Vorliegen von Antriebsschlupf wird daher versucht, die Räder durch diagonale Bremseingriffe so abzubremsen, dass ihre frei rollende Geschwindigkeit berechnet werden kann, um damit auf die Fahrzeuggeschwindigkeit zu schließen. Durch das Abbremsen der Räder wird aber das Gesamtantriebsmoment des Fahrzeugs reduziert. Dies ist für den Fahrer als Verzögerung spürbar, was vielfach nicht erwünscht ist.

Aus den Druckschriften DE 40 10 212 A1, DE 35 34 022 A1 und US 2007/061061 sind außerdem verschiedene Verfahren zur Ermittlung des Kraftschlussbeiwerts beziehungsweise des Reibungskoeffizienten zwischen Reifen und Fahrbahn bekannt. Dabei wird ein Rad abgebremst oder beschleunigt, so dass es frei rollt oder sich im linearen Bereich der Mue-Schlupfkurve befindet. Bei diesen Verfahren ist es nachteilig, dass sich durch einseitiges Eingreifen an einer Fahrzeugseite ein Giermoment einstellt. Außerdem wird durch solche Eingriffe das Gesamtantriebsmoment reduziert, was vom Fahrer häufig als störend empfunden wird.

Der Erfindung liegt daher die Aufgabe zugrunde, die bekannten Verfahren zur Bestimmung der Fahrzeuggeschwindigkeit zu verbessern, wobei insbesondere eine Verzögerung des Kraftfahrzeuges minimiert werden soll.

### Offenbarung der Erfindung

Erfindungsgemäß wird diese Aufgabe gelöst durch ein Verfahren gemäß Patentanspruch 1.
Weitere Ausgestaltungen der Erfindung sind Gegenstand von abhängigen Ansprüchen.

Bei dem erfindungsgemäßen Verfahren wird eine erste Gruppe von Rädern verzögert und gleichzeitig eine zweite Gruppe von Rädern beschleunigt, wobei die erste und die zweite Gruppe jeweils mindestens zwei an gegenüberliegenden Fahrzeugseiten angeordnete Räder umfassen. Mit Hilfe eines Rad-Drehzahlsensors wird eine Radgeschwindigkeit eines Rades der ersten Gruppe erfasst und daraus die Fahrzeuggeschwindigkeit ermittelt.. Im Antriebsschlupffall wird die erste Gruppe auf die Referenzgeschwindigkeit frei drehender Räder verzögert, und die zweite Gruppe etwa in gleichem Maß beschleunigt, d.h. der Eingriff erfolgt im Wesentlichen antriebsmomentenneutral. Dadurch kann einerseits die Fahrzeuggeschwindigkeit genau bestimmt werden, andererseits bleibt das auf das Fahrzeug wirkende Antriebsmoment im Wesentlichen konstant.

Bei einem Fahrzeug mit vier Rädern sind die Räder der ersten Gruppe vorzugsweise einer ersten Fahrzeugdiagonale zugeordnet. Die Räder der zweiten Gruppe sind der zweiten Fahrzeugdiagonale zugeordnet. Jede Gruppe umfasst in diesem Fall wenigstens zwei Räder. Wahlweise können die Räder der ersten Gruppe auch einer ersten Achse und die Räder der zweiten Gruppe einer zweiten Achse zugeordnet sein. In jedem Fall ist der Eingriff an Rädern giermomentenneutral, d.h. das Kraftfahrzeug erfährt kein Drehmoment um seine Hochachse.

Gemäß einer speziellen Ausführungsform der Erfindung wird in einem weiteren Verfahrensschritt die erste Gruppe von Rädern beschleunigt und gleichzeitig die zweite Gruppe von Rädern verzögert. Es erfolgt also der umgekehrte Eingriff an den Radgruppen. Die beiden Verfahrensschritte können abwechselnd wiederholt werden.

Eine Verzögerung von Rädern kann prinzipiell entweder durch Bremsen oder durch Reduktion des Antriebsmoments erreicht werden. Bei einem Fahrzeug mit Elektromotor ist es z. B. durch Abschalten des elektrischen Stroms möglich, das Antriebsmoment in kurzer Zeit zu reduzieren. Durch Vorgabe eines Soll-Moments von z. B. 0 Nm für einen Elektromotor kann ein Freirollen des zugehörigen Rades bewirkt werden.

Bei der Verzögerung bzw. der Beschleunigung einzelner Räder wird vorzugsweise die Trägheit der Antriebskonfiguration des Kraftfahrzeuges berücksichtigt. Die Massenträgheit des Antriebsstrangs ist bestimmend für die Dynamik der Verzögerung oder Beschleunigung eines Rades.

Die Verzögerung und gleichzeitige Beschleunigung dauert vorzugsweise nur eine kurze Zeit, bevorzugt zwischen 10 ms und 1 s. Diese Zeitdauer ist ausreichend, um die Fahrzeuggeschwindigkeit zu bestimmen, beeinflusst das Fahrverhalten des Fahrzeugs aber nur gering.

Ein Algorithmus zur Durchführung des erfindungsgemäßen Verfahrens ist vorzugsweise in einem Steuergerät hinterlegt. Wenn die Fahrzeuggeschwindigkeit bestimmt werden soll steuert das Steuergerät die Fahrzeugantriebe und/oder die Radbremsen, wie vorstehend beschrieben, an.

Die Erfindung kann insbesondere bei Fahrzeugen mit zwei oder mehr Antrieben, wie z. B. Fahrzeugen mit einem einer ersten Achse zugeordneten ersten Antrieb und einem einer zweiten Achse zugeordneten zweiten Antrieb, oder bei Fahrzeugen mit radindividuellen Antrieben eingesetzt werden.

Das erfindungsgemäße Verfahren wird im Folgenden anhand der Figuren beispielhaft näher erläutert. Es zeigen:
- Fig. 1a: den Verlauf des Antriebsmoments bei einer Verzögerung von Rädern nach einem herkömmlichen Verfahren;
- Fig. 1b: den Verlauf der zugehörigen Radgeschwindigkeiten;
- Fig. 2a: den Verlauf verschiedener Antriebsmomente bei einer Verzögerung und Beschleunigung einzelner Räder nach einem erfindungsgemäßen Verfahren; und
- Fig. 2b: den Verlauf der zugehörigen Radgeschwindigkeiten.

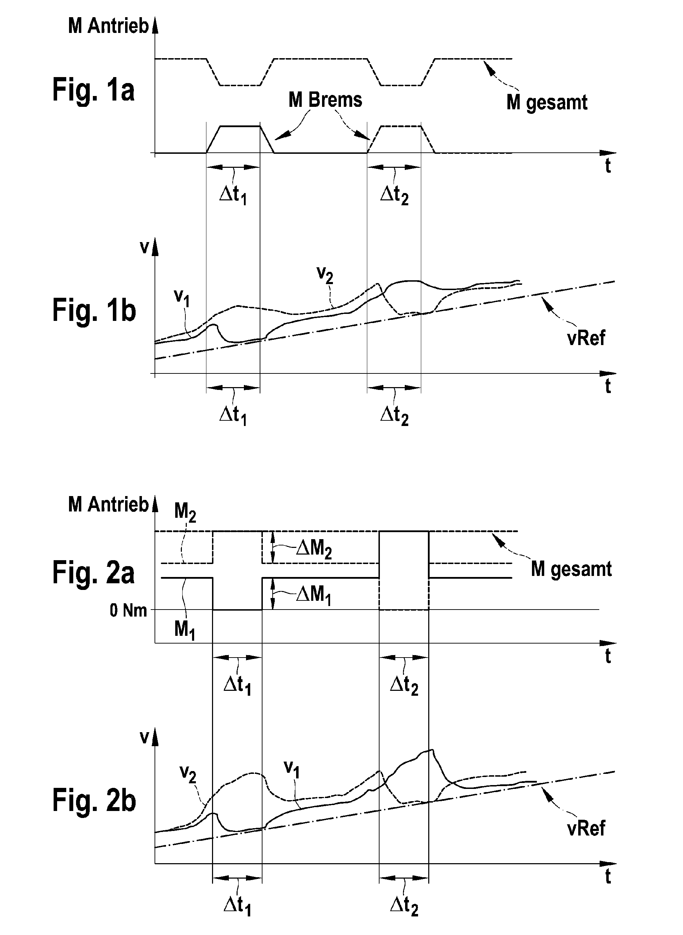

Fig. 1 a zeigt die zeitweise Verzögerung mehrer Räder gemäß einem aus dem Stand der Technik bekannten Verfahren. Dabei ist das an den Rädern ausgeübte Bremsmoment mit M_{Brems} und das Gesamt-Antriebsmoment des Fahrzeugs mit M_{gesamt} bezeichnet. In einem ersten Zeitintervall Δt₁ werden die Räder einer ersten Fahrzeugdiagonale abgebremst.

Infolge dessen reduziert sich das Gesamt-Antriebsmoment M_{gesamt} um ein einen entsprechenden Betrag. Danach werden in einem zweiten Zeitintervall Δt₂ die Räder der zweiten Fahrzeugdiagonale abgebremst. Das Gesamt-Antriebsmoment M_{gesamt} reduziert sich wiederum entsprechend. Das erste Δt₁ und zweite Zeitintervall Δt₂ betragen jeweils ca. 20 ms.

In Fig. 1b sind die zugehörigen Geschwindigkeiten v der einzelnen Räder dargestellt. Wie zu erkennen ist, sinkt die Geschwindigkeit v₁ der Räder der ersten Diagonale im ersten Zeitintervall Δt₁ auf eine Referenzgeschwindigkeit v_{Ref} ab, bei der sie im linearen Bereich der Mue-Schlupf Kurve rollen. Die Geschwindigkeit v₂ der Räder der zweiten Fahrzeugdiagonale bleibt im ersten Zeitintervall Δt₁ nahezu konstant. Für das zweite Zeitintervall Δt₂ gilt umgekehrtes.

### Ausführungsform der Erfindung

In den Fig. 2a und 2b ist der zeitliche Verlauf von Antriebsmomenten M_{Antrieb} und der zugehörigen Radgeschwindigkeiten v bei Verwendung des erfindungsgemäßen Verfahrens gezeigt.

Im ersten Zeitintervall Δt₁ werden die Räder der ersten Fahrzeugdiagonale des Kraftfahrzeuges abgebremst, indem ein Antriebsmoment M₁ um ΔM₁ reduziert wird. Gleichzeitig werden die Räder der zweiten Fahrzeugdiagonale beschleunigt und deren Antriebsmoment M₂ um ΔM₂ erhöht. Das Gesamtantriebsmoment M_{gesamt} = M₁ + M₂ bleibt auf einem konstanten Wert. Im ersten Zeitintervall Δt₁ gilt für ΔM₁ = ΔM₂: M_{gesamt} = (M₁ - ΔM₁) + (M₂ + ΔM₂) = M₁ + M₂ .

Im zweiten Zeitintervall Δt₂ werden dann die Räder der ersten Gruppe um ΔM₁ beschleunigt und die Räder der zweiten Gruppe um ΔM₂ verzögert, wobei das Gesamtantriebsmoment M_{gesamt} ebenfalls konstant bleibt. Im zweiten Zeitintervall Δt₂ ergibt sich für ΔM₁ = ΔM₂: M_{gesamt} = (M₁ + ΔM₁) + (M₂ - ΔM₂) = M₁ + M₂. Das Beschleunigen und Verzögern der einzelnen Radgruppen wird periodisch wiederholt.

Fig. 2b zeigt die entsprechenden Geschwindigkeiten v der Räder der einzelnen Gruppen. Im ersten Zeitintervall Δt₁ reduziert sich die Geschwindigkeit v₁ der Räder der ersten Gruppe bis zur Referenzgeschwindigkeit v_{Ref}. Die Geschwindigkeit v₂ der Räder der zweiten Gruppe nimmt entsprechend dem Moment ΔM₂ zu. Im zweiten Zeitintervall Δt₂ nimmt hingegen die Geschwindigkeit v₁ der Räder der ersten Gruppe zu und die Geschwindigkeit v₂ der Räder der zweiten Gruppe bis zur Referenzgeschwindigkeit v_{Ref} ab.

Die Geschwindigkeit des Kraftfahrzeuges steigt bei Durchführung des in den Fig. 2a und 2b beschriebenen Verfahrens im gesamten Zeitraum mit konstanter Steigung an.

## Patentansprüche

1. Verfahren zur Ermittlung der Geschwindigkeit eines Kraftfahrzeugs mit vier Rädern mit Hilfe von Rad-Drehzahlsensoren, wobei eine erste Gruppe von Rädern des Kraftfahrzeuges auf die Referenzgeschwindigkeit frei drehender Räder verzögert wird, **dadurch gekennzeichnet, dass** gleichzeitig eine zweite Gruppe von Rädern des Kraftfahrzeuges beschleunigt wird,
- wobei die Räder der ersten Gruppe einer ersten Fahrzeugdiagonalen zugeordnet sind und die Räder der zweiten Gruppe der zweiten Fahrzeugdiagonalen zugeordnet sind oder die Räder der ersten Gruppe einer ersten Achse und die Räder der zweiten Gruppe einer zweiten Achse des Kraftfahrzeugs zugeordnet sind,
- wobei die Räder derart verzögert und beschleunigt werden, dass das Gesamt-Antriebsmoment (M_{Gesamt}) des Kraftfahrzeuges im Wesentlichen konstant bleibt,
- und wobei wenigstens eine Radgeschwindigkeit eines Rades der ersten Gruppe mit einem Rad-Drehzahlsensor erfasst und daraus die Fahrzeuggeschwindigkeit bestimmt wird.

2. Verfahren nach Anspruch 1, **dadurch gekennzeichnet, dass** in einem weiteren Verfahrensschritt die erste Gruppe von Rädern beschleunigt und gleichzeitig die zweite Gruppe von Rädern verzögert wird.

3. Verfahren nach Anspruch 2, **dadurch gekennzeichnet, dass** die an den Rädern der einen Gruppe vorgegebene Verzögerung (ΔM₁) etwa gleich groß wie die Beschleunigung (ΔM₂) der anderen Gruppe ist.

4. Verfahren nach einem der vorhergehenden Ansprüche, **dadurch gekennzeichnet, dass** die Verzögerung (ΔM₁) der jeweiligen Räder durch einen Bremseingriff (M_{Brems}) erfolgt.

5. Verfahren nach einem der Ansprüche 1 bis 4, **dadurch gekennzeichnet, dass** die Verzögerung (ΔM₁) der jeweiligen Räder durch eine Reduzierung des Antriebsmoments (M₁) erfolgt.

6. Verfahren nach Anspruch 5, **dadurch gekennzeichnet, dass** bei der Verzögerung (ΔM₁) bzw. der Beschleunigung (ΔM₂)der einzelnen Räder die Trägheit der Antriebskonfiguration des Kraftfahrzeuges berücksichtigt wird.

7. Verfahren nach einem der vorhergehenden Ansprüche, **dadurch gekennzeichnet, dass** die Verzögerung (ΔM₁) und die gleichzeitige Beschleunigung (ΔM₂) für eine kurze Zeitdauer (Δt₁, Δt₂), bevorzugt zwischen 10 ms und 1 s erfolgt.

## Claims

1. Method for determining the speed of a motor vehicle having four wheels using wheel rotational speed sensors, wherein a first group of wheels of the motor vehicle is decelerated to the reference speed of freely rotating wheels, **characterized in that** at the same time a second group of wheels of the motor vehicle is accelerated,
- wherein the wheels of the first group are assigned to a first vehicle diagonal, and the wheels of the second group are assigned to the second vehicle diagonal, or the wheels of the first group are assigned to a first axle, and the wheels of the second group are assigned to a second axle, of the motor vehicle,
- wherein the wheels are decelerated and accelerated in such a way that the total drive torque (Mₜₒₜₐₗ) of the motor vehicle remains essentially constant,
- and wherein at least one wheel speed of a wheel of the first group is detected with a wheel rotational speed sensor and the vehicle speed is determined on the basis thereof.

2. Method according to Claim 1, **characterized in that** in a further method step the first group of wheels is accelerated and at the same time the second group of wheels is decelerated.

3. Method according to Claim 2, **characterized in that** the deceleration (ΔM₁) which is predefined at the wheels of one group is approximately of the same magnitude as the acceleration (ΔM₂) of the other group.

4. Method according to one of the preceding claims, **characterized in that** the deceleration (ΔM₁) of the respective wheels is implemented by means of a braking intervention (M_{brake}) .

5. Method according to one of Claims 1 to 4, **characterized in that** the deceleration (ΔM₁) of the respective wheels is implemented by means of a reduction in the drive torque (M₁).

6. Method according to Claim 5, **characterized in that** the inertia of the drive configuration of the motor vehicle is taken into account during the deceleration (ΔM₁) or the acceleration (ΔM₂) of the individual wheels.

7. Method according to one of the preceding claims, **characterized in that** the deceleration (ΔM₁) and the simultaneous acceleration (ΔM₂) are implemented for a brief period of time (Δt₁, Δt₂), preferably between 10 ms and 1 s.

## Revendications

1. Procédé de détermination de la vitesse d'un véhicule automobile doté de quatre roues à l'aide de capteurs de vitesse de rotation de roue, un premier groupe de roues du véhicule automobile étant retardé pour atteindre la vitesse de référence des roues en rotation libre, **caractérisé en ce qu'**un deuxième groupe de roues du véhicule automobile est accéléré simultanément ;
- les roues du premier groupe étant associées à une première diagonale de véhicule et les roues du deuxième groupe étant associées à la deuxième diagonale de véhicule ou les roues du premier groupe étant associées à un premier essieu et les roues du deuxième groupe étant associées à un deuxième essieu du véhicule automobile ;
- les roues étant ralenties et accélérées de telle sorte que le couple d'entraînement total (M_{Gesamt}) du véhicule automobile reste pour l'essentiel constant ;
- et au moins une vitesse de roue d'une roue du premier groupe étant détectée au moyen d'un capteur de vitesse de rotation de roue et la vitesse du véhicule étant définie à partir de cet élément.

2. Procédé selon la revendication 1, **caractérisé en ce que** le premier groupe de roues est accéléré et que le deuxième groupe de roues est simultanément ralenti au cours d'une étape de procédé supplémentaire.

3. Procédé selon la revendication 2, **caractérisé en ce que** le ralentissement (ΔM₁) prédéfini au niveau des roues du premier groupe est approximativement égal à l'accélération (ΔM₂) de l'autre groupe.

4. Procédé selon l'une quelconque des revendications précédentes, **caractérisé en ce que** le ralentissement (ΔM₁) des roues respectives se produit par le biais d'une intervention de frein (M_{Brems}).

5. Procédé selon l'une quelconque des revendications 1 à 4, **caractérisé en ce que** le ralentissement (ΔM1) des roues respectives se produit par le biais d'une réduction du moment d'entraînement (M₁).

6. Procédé selon la revendication 5, **caractérisé en ce qu'**en présence du ralentissement (ΔM1) et/ou de l'accélération (ΔM₂) des roues individuelles, l'inertie de la configuration d'entraînement du véhicule automobile est prise en compte.

7. Procédé selon l'une quelconque des revendications précédentes, **caractérisé en ce que** le ralentissement (ΔM₁ et l'accélération (ΔM₂) simultanée se produit pour une courte durée (Δt₁, Δt₂), de façon préférée entre 10 ms et 1 s.
